# EUROPÄISCHE PATENTANMELDUNG

(11) **EP 4 611 310 A1**
(43) Veröffentlichungstag der Anmeldung: **03.09.2025**
(21) Anmeldenummer: 24160311.7
(22) Anmeldetag: 28.02.2024
(51) Int. Cl.: H04L 9/40

(54) **NETZWERKSYSTEM ZUM STEUERN VON NETZWERKVERKEHR**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Die Erfindung betrifft ein Netzwerksystem (S) zum Steuern von Netzwerkverkehr (V), wobei das Netzwerksystem (S) mit einer ersten und einer zweiten Regelwerkdurchsetzungseinheit (PEP1, PEP2), die dazu ausgebildet sind, eingehenden Netzwerkverkehr (V) zu untersuchen, vordefinierte Regeln aus einer Regelwerksdatenbank (RW1, RW2) abzurufen und den Netzwerkverkehr (V) basierend auf diesen vordefinierten Regeln zu filtern, und mit einer Überwachungseinheit (R) zum Überwachen der ersten und/oder der zweiten Regelwerkdurchsetzungseinheit (PEP1, PEP2) ausgestattet ist, wobei die Überwachungseinheit (R) dazu ausgebildet ist, basierend auf dem eingehenden Netzwerkverkehr (V), der durch die erste und/oder die zweite Regelwerkdurchsetzungseinheit (PEP1, PEP2) läuft, eine Filterung des Netzwerkverkehrs (V) durch die erste und/oder die zweite Regelwerkdurchsetzungseinheit (PEP1, PEP2) zu aktivieren.

Durch dieses Netzwerksystem kann eine bedarfsabhängige Aktivierung bzw. Deaktivierung insbesondere der zweiten Regelwerkdurchsetzungseinheit durchgeführt werden, wodurch eine Überlastung des Gesamtsystems und insbesondere der ersten Regelwerkdurchsetzungseinheit vermieden werden kann.

## Beschreibung

Die vorliegende Erfindung betrifft ein Netzwerksystem zum Steuern von Netzwerkverkehr. Darüber hinaus betrifft die vorliegende Erfindung ein Verfahren zum Steuern von Netzwerkverkehr. Des Weiteren betrifft die vorliegende Erfindung ein Computerprogrammprodukt, welches auf einer programmgesteuerten Einrichtung die Durchführung des Verfahrens zum Steuern von Netzwerkverkehr veranlasst.

Um zu verhindern, dass Netzwerkverkehr, der von außen in ein Netzwerksystem eingeht, dort Schaden anrichtet, z.B. durch Attacken von Dritten, Schadsoftware oder ähnliches, ist es bekannt, Netzwerkverbindungen einzuschränken bzw. den eingehenden Netzwerkverkehr vor einer Weiterleitung innerhalb des Netzwerksystems zu untersuchen. Hierzu können verschiedene Arten von sogenannten Regelwerkdurchsetzungseinheiten (Policy Enforcement Punkte, PEPs) verwendet werden. Diese können als eigenständige Geräte in Form von dedizierten externen Firewall-Komponenten betrieben oder direkt auf einem Endgerät oder Host (z.B. mit Hilfe einer Linux Netfilter Firewall) zur Verfügung gestellt werden.

Diese Regelwerkdurchsetzungseinheiten, im Folgenden auch Firewall genannt, können bzgl. ihrer Funktionalität bzw. der zur Verfügung stehenden Analysefähigkeiten unterschiedlich ausgeprägt sein und auf unterschiedlichen ISO/OSI-Schichten Beschränkungsfunktionalitäten bereitstellen. Unter einer Beschränkungsfunktionalität kann hier allgemein ein Weiterleiten oder Blockieren von eingehendem Netzwerkverkehr basierend auf verschiedenen Eigenschaften des Netzwerkverkehrs abhängig von der jeweiligen Funktionalität der Regelwerkdurchsetzungseinheit verstanden werden. So kann z.B. eine lokale Firewall Netzwerkverkehre bis zur ISO/OSI-Schicht 4 (TCP und UDP) reglementieren. Höherwertige Firewalls können höherwertige Funktionen bereitstellen und beispielsweise Protokollanalysen durchführen und eine Inhaltsüberprüfung von Datenpaketen in dem Netzwerkverkehr durchführen. So kann nicht nur überprüft werden, ob eine Verbindung auf ISO/OSI-Schicht-4-Ebene erlaubt ist, sondern auch, ob das tatsächlich erwartete Protokoll auf der freigeschalteten Verbindung verwendet wird (z.B. wird überprüft, ob, wenn Netzwerkverkehr über Port 22 eingeht, dieser tatsächlich das ssh-Protokoll verwendet).

Weitere Ausgestaltungen von Regelwerkdurchsetzungseinheiten sind z.B. Web-Application-Firewalls, welche bei eingehenden Anfragen Analysen auf der Anwendungsprotokollebene (ISO/OSI-Schicht 7) durchführen. Im containerisierten Umfeld existieren mit Lösungen wie Envoy (siehe auch https://www.envoyproxy.io) Applikationsproxies, welche ebenfalls eine Regelwerkdurchsetzungseinheit auf Anwendungsprotokollebene repräsentieren.

Abhängig von den Analysefähigkeiten der beschriebenen Regelwerkdurchsetzungseinheiten ist auch der Ressourcenbedarf der jeweiligen Regelwerkdurchsetzungseinheiten. Grundsätzlich lässt sich hierbei üblicherweise sagen: Je höherwertiger die Analysefähigkeiten der Regelwerkdurchsetzungseinheit, desto höher der Ressourcenbedarf.

Besonders im orchestrierten Container-Umfeld werden vor allem Ost-West-Verkehre (z.B. Netzwerkverbindungen zwischen Containern auf dem Host) über lokale auf dem Host betriebene Regelwerkdurchsetzungseinheiten beschränkt. Gleichzeitig ist es möglich, dass beispielsweise im industriellen Umfeld Geräte innerhalb größerer Netze exponiert werden und diese (z.B. in mittelständischen Betrieben) schlecht geschützt sind. Solche Geräte sind im schlimmsten Fall zum Internet exponiert. Wird eine höherwertige Regelwerkdurchsetzungseinheit auf einem solchen Gerät (wie z.B. einem Edge-Device oder einem medizinischen Gerät) betrieben, besteht somit das Problem, dass durch die Höherwertigkeit der lokalen Regelwerkdurchsetzungseinheit, und des damit verbundenen höheren Ressourcenbedarfs, ein Angreifer leichter bestimmte Ressourcengrenzen des Gerätes, bzw. der auf dem Gerät implementierten Regelwerkdurchsetzungseinheit, erreichen kann und somit beispielsweise die Wahrscheinlichkeit erfolgreicher "Denial of Service"-Attacken höher ist. Höherwertige Regelwerkdurchsetzungseinheits-Funktonen sind jedoch gewünscht, um anwendungsnäher eine Filterung der zu reglementierenden Netzwerkverkehre durchführen zu können und somit z.B. die missbräuchliche Verwendung eines freigeschalteten TCP- oder UDP-Ports zu verhindern.

Vor diesem Hintergrund besteht eine Aufgabe der vorliegenden Erfindung darin, Netzwerkverkehr derart zu steuern, dass sowohl eine ausreichende Filterung des eingehenden Netzwerksverkehrs als auch ein ausreichender Schutz vor Attacken, insbesondere Denial-of-Service-Attacken, erreicht wird, insbesondere im Fall von begrenzt zur Verfügung stehenden Ressourcen.

Demgemäß wird ein Netzwerksystem zum Steuern von Netzwerkverkehr vorgeschlagen. Das Netzwerksystem weist eine erste und eine zweite Regelwerkdurchsetzungseinheit auf. Diese Regelwerkdurchsetzungseinheiten, auch Policy-Enforcement-Punkte (PEP) genannt, können als eigenständige Einheiten vorgesehen sein, oder können auf einem Hostsystem implementiert sein. In jedem Fall sind sie dazu ausgebildet, eingehenden Netzwerkverkehr zu untersuchen, vordefinierte Regeln aus einer Regelwerksdatenbank abzurufen und den Netzwerkverkehr basierend auf diesen vordefinierten Regeln zu filtern. Diese Filterung des Netzwerkverkehrs kann anhand verschiedener Eigenschaften des Netzwerkverkehrs, bzw. der darin enthaltenen Datenpakete, erfolgen. Beispielsweise kann der Netzwerkverkehr basierend auf der Herkunft der Datenpakete, in den Datenpaketen enthaltener Meta-Informationen, angefragter Port, etc. gefiltert werden. Abhängig von der jeweiligen Funktionalität der Regelwerkdurchsetzungseinheit kann sich die Filterung auf eine allgemeinere Filterung (Größe, Herkunft, Eingangsport der Datenpakete) oder auf eine genauere Filterung (insbesondere Inhalt der Datenpakete) beziehen.

Das Netzwerksystem kann des Weiteren eine Überwachungseinheit aufweisen, die zum Überwachen der ersten und/oder der zweiten Regelwerkdurchsetzungseinheit ausgebildet ist. Insbesondere ist die Überwachungseinheit dazu ausgebildet, basierend auf dem eingehenden Netzwerkverkehr, der durch die erste und/oder die zweite Regelwerkdurchsetzungseinheit läuft, eine Filterung des Netzwerkverkehrs durch die erste und/oder die zweite Regelwerkdurchsetzungseinheit zu aktivieren.

Im Gegensatz zu bisherigen Systemen, in denen der eingehende Netzwerkverkehr durch die vorhandene Regelwerkdurchsetzungseinheit gefiltert wird, ist bei dem hier vorgeschlagenen Netzwerksystem vorgesehen, dass die Überwachungseinheit die erste und die zweite Regelwerkdurchsetzungseinheit überwacht, und basierend auf einer Verarbeitung des Netzwerkverkehrs durch diese Regelwerkdurchsetzungseinheiten entscheidet, welche der Regelwerkdurchsetzungseinheiten für eine Filterung des Netzwerkverkehrs zuständig ist. Auf diese Weise kann eine bedarfsgerechte Aktivierung (bzw. Deaktivierung) der beiden Regelwerkdurchsetzungseinheiten erfolgen. Beispielsweise kann, wenn, wie oben beschrieben, die Ressourcen einer Regelwerkdurchsetzungseinheit ausgeschöpft sind, die andere Regelwerkdurchsetzungseinheit aktiviert werden, um eine Denial-of-Service-Attacke zu verhindern.

Die Überwachungseinheit kann, wie die Regelwerkdurchsetzungseinheiten, als eigenständige Einheit vorgesehen sein oder kann auf einem Hostsystem, beispielsweise mit einer oder beiden Regelwerkdurchsetzungseinheiten, implementiert sein. Des Weiteren sollte beachtet werden, dass, obwohl hier eine erste und eine zweite Regelwerkdurchsetzungseinheit beschrieben ist, das Netzwerksystem mehr als zwei, beispielsweise drei oder vier Regelwerkdurchsetzungseinheiten, aufweisen kann. In diesem Fall kann die Überwachungseinheit entsprechend die drei oder mehr Regelwerkdurchsetzungseinheiten je nach Bedarf aktivieren oder deaktivieren.

Die jeweilige Einheit, zum Beispiel Überwachungseinheit oder Regelwerkdurchsetzungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuereinheit auf einem Server, einem Hostsystem oder ähnlichem ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform sind die erste und die zweite Regelwerkdurchsetzungseinheit dazu ausgebildet, unterschiedliche vordefinierte Regeln anzuwenden. Beispielsweise kann die erste Regelwerkdurchsetzungseinheit Regeln anwenden, die einer höheren Analysefähigkeit entsprechen und beispielsweise auf den Inhalt von Datenpaketen in dem eingehenden Netzwerkverkehr angewendet werden. Die erste Regelwerkdurchsetzungseinheit kann somit einer Regelwerkdurchsetzungseinheit mit höherer Intelligenz entsprechen. Üblicherweise benötigt eine solche Regelwerkdurchsetzungseinheit allerdings mehr Zeit und hat einen höheren Ressourcenbedarf (z.B. Rechenressourcen). Im Gegensatz dazu kann die zweite Regelwerkdurchsetzungseinheit Regeln anwenden, die einer geringeren Analysefähigkeit entsprechen und auf allgemeinere Eigenschaften des Netzwerkverkehrs bzw. der darin enthaltenen Datenpakete abzielen, d.h. ohne eine tiefere Analyse des Inhalts der Datenpakete (z.B. allgemein auf deren Größe, Herkunft etc.). Die zweite Regelwerkdurchsetzungseinheit weist somit zwar eine geringere Intelligenz auf, kann dadurch jedoch schneller arbeiten. Je nach Netzwerkverkehr, der durch die Regelwerkdurchsetzungseinheiten durchläuft, kann die Überwachungseinheit die Regelwerkdurchsetzungseinheiten aktivieren bzw. deaktivieren und somit eine Filterung des Netzwerkverkehrs veranlassen, die entweder schneller, dafür weniger sicher, oder aber sehr sicher, dafür langsamer und mit höherem Ressourcenbedarf verbunden ist. Auf diese Weise wird durch die Überwachungseinheit eine automatische Steuerung, d.h. insbesondere Analyse und Beschränkung, von Netzwerkverkehr realisiert, die von dem jeweiligen aktuell vorhandenen Netzwerkverkehr abhängt.

Gemäß einer weiteren Ausführungsform ist die erste Regelwerkdurchsetzungseinheit dazu ausgebildet, den gesamten eingehenden Netzwerkverkehr anhand der vordefinierten Regeln zu filtern. Das bedeutet, dass in dieser Ausführungsform der eingehende Netzwerkverkehr zunächst, beispielsweise als Anfangs- oder Default-Zustand, durch die erste Regelwerkdurchsetzungseinheit gefiltert wird. Die Überwachungseinheit ist dann dazu ausgebildet, basierend auf dem durch die erste Regelwerkdurchsetzungseinheit durchgehenden Netzwerkverkehr die zweite Regelwerkdurchsetzungseinheit zur Filterung des gesamten Netzwerkverkehrs oder Teilen des eingehenden Netzwerkverkehrs zu aktivieren. Das bedeutet, dass die zweite Regelwerkdurchsetzungseinheit in dem Anfangszustand keine Filterung des Netzwerkverkehrs durchführt und nur dann aktiviert wird, wenn die Überwachungseinheit basierend auf dem aktuell durch die erste Regelwerkdurchsetzungseinheit durchgehenden Netzwerkverkehr entscheidet, dass eine Aktivierung der Filterung durch die zweite Regelwerkdurchsetzungseinheit erforderlich ist. Auf diese Weise kann die zweite Regelwerkdurchsetzungseinheit bedarfsabhängig aktiviert oder auch wieder deaktiviert werden. Hierdurch kann sowohl der Ressourcenbedarf des gesamten Netzwerksystems reduziert werden (wenn die zweite Regelwerkdurchsetzungseinheit nicht benötigt und daher deaktiviert ist) als auch eine Ressourcenüberlastung der ersten Regelwerkdurchsetzungseinheit vermieden werden (da bei einer Überlastung der ersten Regelwerkdurchsetzungseinheit die zweite Regelwerkdurchsetzungseinheit aktiviert werden kann).

Gemäß einer weiteren Ausführungsform ist die Überwachungseinheit dazu ausgebildet, die Filterung durch die zweite Regelwerkdurchsetzungseinheit basierend auf einem Ereignis in dem durch die erste Regelwerkdurchsetzungseinheit gefilterten Netzwerkverkehr zu aktivieren. Ein solches Ereignis, oder mehrere Ereignisse, das/die zu einer Aktivierung der zweiten Regelwerkdurchsetzungseinheit führt/führen, kann/können vordefiniert sein und beispielsweise in einer Regelwerksdatenbank hinterlegt sein. Durch diese Ausführungsform kann die Überwachungseinheit eine automatische Aktivierung der zweiten Regelwerkdurchsetzungseinheit durchführen, wodurch das Netzwerksystem schnell auf solche Ereignisse reagieren kann. Ein Angriff, z.B. eine Denial-of-Service-Attacke, auf das Netzwerksystem kann somit zuverlässig verhindert werden.

Das Ereignis oder die Ereignisse können eine Eigenschaft der in dem Netzwerkverkehr enthaltenen Pakete (z.B. Größe, Herkunft, Ziel, etc.), Meta-Informationen der in dem Netzwerkverkehr enthaltenen Pakete (z.B. ein bestimmter Inhalt des Headers eines Datenpakets), ein Ergebnis einer statistischen Auswertung des Netzwerkverkehrs (z.B. ist die Anzahl der Pakete von einer Ursprungsquelle größer als ein vordefinierte Schwellenwert) und/oder eine Übereinstimmung des Netzwerkverkehrs mit den vordefinierten Regeln sein. Im letzten Fall kann in den vordefinierten Regeln beispielsweise hinterlegt sein, welche Art von Datenpaket, Menge an Datenpaketen allgemein, etc., als ein Ereignis zur Aktivierung der zweiten Regelwerkdurchsetzungseinheit zu interpretieren ist.

Beispielsweise kann bei der Überschreitung einer bestimmten in den vordefinierten Regeln hinterlegten Verbindungsanzahl die Überwachungseinheit eine Verlagerung des Netzwerkverkehrs von der ersten Regelwerkdurchsetzungseinheit auf die zweite Regelwerkdurchsetzungseinheit durchführen. Eine solche Verlagerung kann ein vollständiges Umleiten des Netzwerkverkehrs von der ersten auf die zweite Regelwerkdurchsetzungseinheit, ein teilweises Umleiten des Netzwerkverkehrs von der ersten auf die zweite Regelwerkdurchsetzungseinheit oder ein Vorschalten der zweiten Regelwerkdurchsetzungseinheit vor die erste Regelwerkdurchsetzungseinheit umfassen.

Durch die Verlagerung des Netzwerkverkehrs von der ersten Regelwerkdurchsetzungseinheit auf die zweite Regelwerkdurchsetzungseinheit kann sichergestellt werden, dass bei einer sich andeutenden Überlastsituation der ersten Regelwerkdurchsetzungseinheit deutlich mehr Netzwerkkapazitäten verfügbar sind. Die erste Regelwerkdurchsetzungseinheit, die vorzugsweise höherwertige Analyse-Fähigkeiten aufweist, kann somit durch die zweite Regelwerkdurchsetzungseinheit entlastet werden und wird dadurch kein Ziel von Denial-of-Service-Attacken.

Gemäß einer weiteren Ausführungsform ist die Überwachungseinheit dazu ausgebildet, die zweite Regelwerkdurchsetzungseinheit nach einem vorbestimmten Zeitraum zu deaktivieren. Dies hat den Vorteil, dass keine Überwachung des Netzwerkverkehrs erforderlich ist, sondern die Deaktivierung der zweiten Regelwerkdurchsetzungseinheit automatisch bei Ablauf des vorbestimmten Zeitraums erfolgt. Alternativ kann die Überwachungseinheit dazu ausgebildet sein, die zweite Regelwerkdurchsetzungseinheit zu deaktivieren, wenn der Netzwerkverkehr ein vorbestimmtes Kriterium erfüllt (z.B. Unterschreitung bestimmter Parameter wie Anzahl bestimmter Verbindungen innerhalb eines Zeitintervalls). Dies hat wiederum den Vorteil, dass eine Deaktivierung der zweiten Regelwerkdurchsetzungseinheit erst dann erfolgt, wenn das für die Aktivierung der zweiten Regelwerkdurchsetzungseinheit verantwortliche Ereignis nicht mehr vorliegt. Somit kann sichergestellt werden, dass bei einer Deaktivierung der zweiten Regelwerkdurchsetzungseinheit die erste Regelwerkdurchsetzungseinheit ordnungsgemäß arbeiten kann, ohne direkt überlastet zu sein.

Gemäß einer weiteren Ausführungsform ist die erste Regelwerkdurchsetzungseinheit hinter die zweite Regelwerkdurchsetzungseinheit geschaltet, wobei eingehender Netzwerkverkehr durch die zweite Regelwerkdurchsetzungseinheit an die erste Regelwerkdurchsetzungseinheit ohne weitere Filterung weitergeleitet bzw. durch die zweite Regelwerkdurchsetzungseinheit durchgeschleift wird. Das bedeutet, dass in dem Anfangs- oder Default-Zustand der Netzwerkverkehr zwar durch die zweite Regelwerkdurchsetzungseinheit durchgeht, allerdings dort keine Filterung des Netzwerkverkehrs erfolgt, sondern die Filterung erst in der nachgeschalteten ersten Regelwerkdurchsetzungseinheit erfolgt. Bei einer Aktivierung der zweiten Regelwerkdurchsetzungseinheit kann dann der Netzwerkverkehr zumindest teilweise bereits in der zweiten Regelwerkdurchsetzungseinheit gefiltert werden. Hierdurch werden weniger Datenpakete des Netzwerkverkehrs an die erste Regelwerkdurchsetzungseinheit weitergeleitet und diese wird somit entlastet.

Zur Aktivierung der zweiten Regelwerkdurchsetzungseinheit kann die Überwachungseinheit dazu ausgebildet sein, eine Regel in die Regelwerksdatenbank für die zweite Regelwerkdurchsetzungseinheit einzufügen, um eine Filterung des Netzwerkverkehrs durch die zweite Regelwerkdurchsetzungseinheit zu aktivieren. Eine solche Regel kann beispielsweise die zweite Regelwerkdurchsetzungseinheit dazu veranlassen, den Netzwerkverkehr auf Datenpakete eines bestimmten Ursprungs hin zu filtern. Diese Datenpakete werden anschließend nicht mehr an die erste Regelwerkdurchsetzungseinheit weitergeleitet. Auf diese Weise können beispielsweise Denial-of-Service-Attacken, die auf eine Überlastung der ersten Regelwerkdurchsetzungseinheit durch viele Datenpakete abzielen, verhindert werden, da Datenpakete, deren Ursprung derselbe ist, herausgefiltert werden. Es ist auch möglich, mehrere Regeln für die zweite Regelwerkdurchsetzungseinheit einzufügen, so dass diese weitere Datenpakete herausfiltern kann.

Sobald das auslösende Ereignis nicht mehr vorliegt oder der vorbestimmte Zeitraum abgelaufen ist, kann die Überwachungseinheit dazu ausgebildet sein, die Filterung des Netzwerkverkehrs durch die zweite Regelwerkdurchsetzungseinheit zu deaktivieren, indem die Regel aus der Regelwerksdatenbank gelöscht wird. Das Einfügen und Löschen einer solchen Regel für die zweite Regelwerkdurchsetzungseinheit stellt eine einfache Möglichkeit bereit, die Filterung durch die zweite Regelwerkdurchsetzungseinheit zu aktivieren, ohne dass die zweite Regelwerkdurchsetzungseinheit selbst angeschaltet und abgeschaltet werden muss.

Gemäß einer weiteren Ausführungsform kann das Netzwerksystem eine Umschalteinheit, beispielsweise einen Router aufweisen. Diese kann der ersten und zweiten Regelwerkdurchsetzungseinheit vorzugsweise vorgelagert sein. Hierbei kann die Überwachungseinheit dazu ausgebildet sein, ein Umschaltsignal an die Umschalteinheit zu senden, die wiederum dazu ausgebildet ist, basierend auf dem Umschaltsignal den Netzwerkverkehr an die erste und/oder die zweite Regelwerkdurchsetzungseinheit zu leiten, wobei das Umschaltsignal eine Aktivierung der Filterung des Netzwerkverkehrs durch die erste und/oder die zweite Regelwerkdurchsetzungseinheit angibt. Anstelle eines Durchschleifens von Netzwerkverkehr durch die zweite Regelwerkdurchsetzungseinheit kann in diesem Fall die Umschalteinheit den Netzwerkverkehr je nach Bedarf direkt an die erste Regelwerkdurchsetzungseinheit, an die zweite Regelwerkdurchsetzungseinheit oder an beide leiten. Beispielsweise kann auf diese Weise der Netzwerkverkehr auf beide Regelwerkdurchsetzungseinheiten aufgeteilt werden, so dass sich die Auslastung der beiden Regelwerkdurchsetzungseinheit ebenfalls aufteilt.

Das Verwenden einer solchen Umschalteinheit hat unter anderem auch den Vorteil, dass die Regelwerkdurchsetzungseinheiten nicht umkonfiguriert werden müssen. Der Netzwerkverkehr kann durch die Umschalteinheit einfach von der ersten auf die zweite Regelwerkdurchsetzungseinheit umgeleitet werden und umgekehrt. Es müssen also nicht die Regelwerkdurchsetzungseinheiten umkonfiguriert werden, sondern nur die Umschalteinheit, auf Veranlassung durch die Überwachungseinheit, eine entsprechende Umleitung vornehmen.

Zusätzlich können auch die erste und die zweite Regelwerkdurchsetzungseinheit hintereinandergeschaltet sein, wie oben beschrieben ist. **In** diesem Fall kann ein Teil des Netzwerkverkehrs, der an die zweite Regelwerkdurchsetzungseinheit geleitet wird, sowohl durch die zweite Regelwerkdurchsetzungseinheit als auch anschließend durch die erste Regelwerkdurchsetzungseinheit gefiltert werden. Hierbei kann auch vorgesehen sein, dass die Umschalteinheit bereits eine Art Vorfilterung durchführt und beispielsweise Datenpakete eines bestimmten Ursprungs einer doppelten Filterung durch beide Regelwerkdurchsetzungseinheiten zuführt. Dies kann die Sicherheit des Gesamtsystems weiter erhöhen, da bestimmte Datenpakete, beispielsweise Datenpakete, die Eigenschaften haben, die auf einer Blacklist aufgeführt sind, sowohl eine grobe Filterung durch die zweite Regelwerkdurchsetzungseinheit als auch eine genauere, detaillierte Filterung die erste Regelwerkdurchsetzungseinheit erfahren. Andere Datenpakete, die von der Umschalteinheit als potenziell ungefährlich eingestuft werden, können hingegen direkt der ersten Regelwerkdurchsetzungseinheit zugeführt werden.

Gemäß einem weiteren Aspekt wird ein Verfahren zum Steuern von Netzwerkverkehr, insbesondere zur Analyse und zur Beschränkung von Netzwerkverkehr, vorgeschlagen, wobei das Verfahren die folgenden Schritte aufweist: Abrufen von vordefinierten Regeln aus einer Regelwerksdatenbank, Untersuchen von eingehendem Netzwerkverkehr und Filtern des Netzwerkverkehrs basierend auf den vordefinierten Regeln durch eine erste und eine zweite Regelwerkdurchsetzungseinheit, und Überwachen der ersten und/oder der zweiten Regelwerkdurchsetzungseinheit durch eine Überwachungseinheit, wobei das Überwachen ein Aktivieren der Filterung des Netzwerkverkehrs durch die erste und/oder die zweite Regelwerkdurchsetzungseinheit basierend auf dem eingehenden Netzwerkverkehr, der durch die erste und/oder die zweite Regelwerkdurchsetzungseinheit läuft, umfasst.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für das vorgeschlagene Netzwerksystem beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagramm eines Netzwerksystems zum Steuern von Netzwerkverkehr gemäß einer ersten Ausführungsform;
- Fig. 2: zeigt ein schematisches Blockdiagramm eines Netzwerksystems zum Steuern von Netzwerkverkehr gemäß einer zweiten Ausführungsform;
- Fig. 3: zeigt ein Nachrichtenflussdiagramm eines Verfahrens zum Steuern von Netzwerkverkehr in einem System gemäß Fig. 1 oder Fig. 2; und
- Fig. 4: zeigt ein schematisches Ablaufdiagramm des Verfahrens zum Steuern von Netzwerkverkehr gemäß Fig. 3.

In den Figuren sind gleiche oder funktionsgleiche Elemente mit denselben Bezugszeichen versehen worden, sofern nichts anderes angegeben ist.

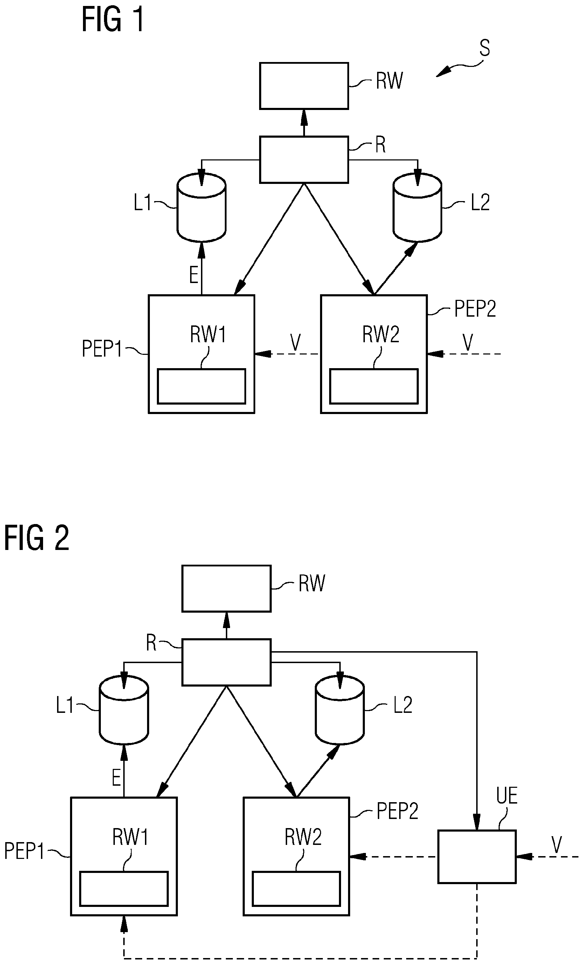

Fig. 1 zeigt ein Netzwerksystem S. Das Netzwerksystem S dient dazu, eingehenden Netzwerkverkehr V mit Hilfe von Regelwerkdurchsetzungseinheiten (Policy Enforcement Punkten) PEP1, PEP2 zu filtern. Der Netzwerkverkehr V wird hier allgemein als Netzwerkverkehr bezeichnet, wobei verstanden werden sollte, dass es sich hier um eingehende Datenpakete handeln, die von unterschiedlichen externen Quellen oder Ursprüngen stammen und über das Netzwerksystem an weitere, nicht gezeigte Einheiten, nach einer Filterung weitergeleitet werden.

Wie in Fig. 1 dargestellt, sind in dem hier gezeigten Netzwerksystem S zwei Regelwerkdurchsetzungseinheiten PEP1 und PEP2 hintereinander geschaltet. Die beiden Regelwerkdurchsetzungseinheiten PEP1 und PEP2 haben vorzugsweise einen unterschiedlichen Funktionsumfang, wobei hier davon ausgegangen wird, dass die Regelwerkdurchsetzungseinheit PEP1 eine höherwertige, d.h. genauere bzw. detaillierte, Analyse des eingehenden Netzwerkverkehrs V durchführt, wobei sie allerdings einen höheren Ressourcenbedarf (in Bezug auf Rechenkapazität und/oder Zeit) hat, im Vergleich zu der zweiten Regelwerkdurchsetzungseinheit PEP2. Jede der Regelwerkdurchsetzungseinheiten PEP1, PEP2 hat ihr eigenes Regelwerk RW1, RW2, in dem vordefinierte Regeln hinterlegt sind, gemäß denen der eingehende Netzwerkverkehr V zu filtern ist. Des Weiteren kann jede der Regelwerkdurchsetzungseinheiten PEP1, PEP2 mit einer entsprechenden Datenbank L1, L2 verbunden sein, in der Log-Einträge über Ereignisse in der jeweiligen Regelwerkdurchsetzungseinheit PEP1, PEP2 gespeichert werden.

In einem Anfangs- bzw. Default-Zustand wird der Netzwerkverkehr V durch die zweite Regelwerkdurchsetzungseinheit PEP2 ohne weitere Filterung durchgeleitet und die Filterung wird von der ersten, höherwertigen Regelwerkdurchsetzungseinheit PEP1 durchgeführt. Sobald die erste Regelwerkdurchsetzungseinheit PEP 1 feststellt, dass bestimmte Anfragen mit bestimmten Eigenschaften ihre Ressourcen über Gebühr beanspruchen könnten, kann die erste Regelwerkdurchsetzungseinheit PEP 1 ein solches Ereignis E in einer Datenbank L1 speichern. Eine Überwachungseinheit (PEP-Relocator-Komponente) R kann entweder diese Datenbank L1 oder direkt die erste Regelwerkdurchsetzungseinheit PEP1 überwachen, um ein solches Ereignis zu detektieren. Sobald die Überwachungseinheit R das Ereignis, z.B. eine potenzielle Überlastung der ersten Regelwerkdurchsetzungseinheit PEP1 detektiert, kann die Überwachungseinheit R aus ihrer eigenen Regelwerksdatenbank RW abrufen, ob in die vorgeschaltete zweite Regelwerkdurchsetzungseinheit PEP2 bzw. deren Regelwerk RW2 eine entsprechende Regel einzutragen ist, welche verhindert, dass der Netzwerkverkehr V, welcher in PEP1 das Ereignis ausgelöst hat, nicht mehr an PEP1 weitergeleitet wird.

Wird eine solche Regel in das Regelwerk RW2 der zweiten Regelwerkdurchsetzungseinheit PEP2 eingetragen, wird der eingehende Netzwerkverkehr V in der zweiten Regelwerkdurchsetzungseinheit PEP2 vorgefiltert und der bei der ersten Regelwerkdurchsetzungseinheit PEP1 eingehende Netzwerkverkehr V ist somit reduziert. Beispielweise kann die zweite Regelwerkdurchsetzungseinheit PEP2 alle Datenpakete eines bestimmten Ursprungs, die das Ereignis in der ersten Regelwerkdurchsetzungseinheit PEP1 ausgelöst haben und beispielsweise als potenzieller Ursprung einer Denial-of-Service-Attacke angesehen werden, herausfiltern. Diese Pakete werden somit nicht mehr an die erste Regelwerkdurchsetzungseinheit PEP1 weitergeleitet und diese kann somit kein Ziel der Denial-of-Service-Attacke werden.

Sobald gewisse Kriterien erfüllt sind, kann die Überwachungseinheit R dann wieder die Rückverlagerung des Netzwerkverkehrs V auf die erste Regelwerkdurchsetzungseinheit PEP1 durchführen, indem die Überwachungseinheit R beispielsweise die eingefügte Regel aufgrund von im Regelwerk hinterlegten Kriterien aus der zweiten Regelwerkdurchsetzungseinheit PEP2 entfernt.

In einem Ausführungsbeispiel kann die erste Regelwerkdurchsetzungseinheit PEP1 eine nftables-basierte Firewall sein und die zweite Regelwerkdurchsetzungseinheit PEP2 kann eine XDP-basierte Firewall sein. In diesem Fall kann die Regel für das Verlagerungs-Ereignis E einen Log-Eintrag im Firewall-Log L1 erzeugen, sobald z.B. innerhalb einer definierten Zeitspanne die Anzahl von TCP-RST oder TCP-SYN Paketen eine definierte Anzahl von Verbindungen überschreitet. Nftables unterstützt solche Regeln bzgl. seines zur Verfügung gestellten Funktionsumfanges. Ein weiteres Beispiel für das Auslösen einer Verlagerung wäre bei einer Firewall bzw. Regelwerkdurchsetzungseinheit, welche auf Applikationsebene arbeitet, dass z.B. innerhalb einer definierten Zeitspanne Cross-Site-Scripting-Versuche von einem Angreifer erkannt werden und im Regelwerk RW2 neben dem eigentlichen Blockieren dieser Anfragen auch das Erzeugen einer entsprechende Log-Information definiert ist. Diese Loginformation muss entsprechende Daten enthalten, um die die vorgeschaltete Firewall entsprechend konfigurieren zu können.

Wie in Fig. 2 dargestellt ist, kann das Netzwerksystem S in einer weiteren Ausführungsform eine Umschalteinheit UE, z.B. einen Router, aufweisen. In dieser Ausführungsform kann die Überwachungseinheit R bei Auftreten eines Ereignisses E die Umschalteinheit UE veranlassen, den Netzwerkverkehr V ganz oder teilweise von der ersten Regelwerkdurchsetzungseinheit PEP1 auf die zweite Regelwerkdurchsetzungseinheit PEP2 umzuleiten. In diesem Fall wird also nicht die zweite Regelwerkdurchsetzungseinheit PEP2 als vorgeschaltete Regelwerkdurchsetzungseinheit implementiert, sondern die beiden Regelwerkdurchsetzungseinheiten PEP1, PEP2 sind parallel geschaltet und der Netzwerkverkehr V wird von der Umschalteinheit UE entsprechend an die eine oder die andere oder beide Regelwerkdurchsetzungseinheiten PEP1, PEP2 geleitet. Die übrigen Funktionalitäten und Merkmale der Ausführungsform der Fig. 1 gelten entsprechend. Auch können die beiden Ausführungsformen kombiniert werden und die Umschalteinheit UE in die Ausführungsform der Fig. 1 integriert werden.

Wie bereits oben erwähnt, kann die Überwachungseinheit R die beiden Regelwerkdurchsetzungseinheiten PEP1, PEP2 bzw. deren Log-Datenbanken L1, L2 überwachen, um ein Ereignis E zu detektieren. Hierbei sollte verstanden werden, dass diese Überwachung sowohl aktiv von der Überwachungseinheit R als auch passiv beispielsweise durch Information durch die Log-Datenbanken L1, L2 bzw. die beiden Regelwerkdurchsetzungseinheiten PEP1, PEP2 erfolgen kann. Die Überwachungseinheit R kann auch durch beliebige andere Komponenten des Netzwerksystems S über entsprechende auftretende Ereignisse E informiert werden.

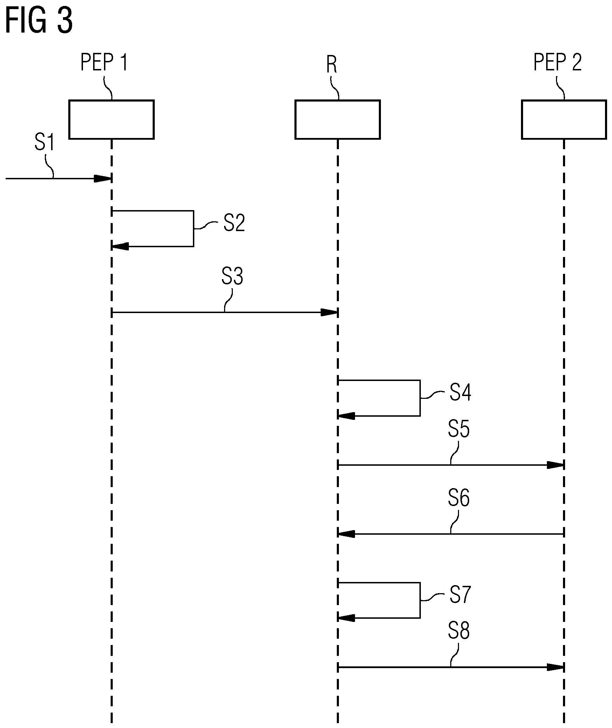

Fig. 3 zeigt ein beispielhaftes Ablaufdiagramm eines Verfahrens zum Steuern von Netzwerkverkehr V, wie es durch das Netzwerksystem von Fig. 1 und 2 durchgeführt werden kann.

In einem ersten Schritt S1 geht Netzwerkverkehr V an der ersten Regelwerkdurchsetzungseinheit PEP1 ein. Anschließend überprüft diese in Schritt S2, ob durch den eingehenden Netzwerkverkehr ein Ereignis E ausgelöst wird (beispielsweise durch Abgleich mit ihrem Regelwerk RW1, bei Überschreiten eines Trigger- oder Schwellenwertes etc.). In diesem Schritt kann auch das Ereignis E in die Log-Datenbank L1 geschrieben werden. In Schritt S3 wird die Überwachungseinheit R von dem Ereignis E informiert (wie oben beschrieben kann dies passiv oder aktiv erfolgen). In Schritt S4 kann die Überwachungseinheit R nun mit dem Regelwerk bzw. der Regelwerksdatenbank RW abgleichen, ob es zu dem Ereignis E zumindest eine Regel gibt, die dann auf die zweite Regelwerkdurchsetzungseinheit PEP2 angewendet werden kann. Bei der Auswahl der auf die zweite Regelwerkdurchsetzungseinheit PEP2 anzuwendenden Regel(n) sind verschiedene Varianten möglich. Es können einzelne Felder des Ereignisses E geprüft werden, diese miteinander kombiniert werden und es können auch sämtliche bekannte String-Matching-Verfahren wie Regular-Expressions angewendet werden. Für die auf die zweite Regelwerkdurchsetzungseinheit PEP2 anzuwendenden Regeln kann beispielsweise ein First-Hit-Verfahren oder Best-Match gewählt werden oder es können sämtliche ermittelten Regeln auf die zweite Regelwerkdurchsetzungseinheit PEP2 angewandt werden.

Um die anzuwendenden Regeln auf die zweite Regelwerkdurchsetzungseinheit PEP2 parametrieren zu können, sollten die hierfür erforderlichen Parameter in der Benachrichtigung, d.h. der Benachrichtigung über das Ereignis E, von der ersten Regelwerkdurchsetzungseinheit PEP1 enthalten sein. Vorteilhafterweise werden die Parameter, die für die auf die zweite Regelwerkdurchsetzungseinheit PEP2 anzuwendenden Regeln erforderlich sind, vollständig geliefert. Alternativ kann die Überwachungseinheit R keine Regel auswählen, sofern Parameter fehlen, das Ereignis E ignorieren und eine entsprechende Fehlermeldung ausgibt.

Wie bereits beschrieben, sind im Regelwerk RW neben den oben beschriebenen Matching-Parametern für die von der ersten Regelwerkdurchsetzungseinheit PEP1 erzeugten Ereignisse E die für die zweite Regelwerkdurchsetzungseinheit PEP2 anzuwendenden Regeln hinterlegt. Zusätzlich zu der oben beschriebenen Auswahl von Regeln basierend auf Parameter, kann es auch möglich sein, dass die von der ersten Regelwerkdurchsetzungseinheit PEP1 gelieferten Parameter nicht direkt in die Regeln für die zweite Regelwerkdurchsetzungseinheit PEP2 eingefügt werden, sondern stattdessen auch entsprechende größere Bereiche des Netzwerkverkehrs V durch die zweite Regelwerkdurchsetzungseinheit PEP2 geblockt werden. Beispielsweise kann die erste Regelwerkdurchsetzungseinheit PEP1 lediglich eine Source-IP-Adresse liefern und die zweite Regelwerkdurchsetzungseinheit PEP2 blockt dann für einen bestimmten Zeitraum den kompletten Netzbereich dieser Source-IP-Adresse oder einen Port-Bereich statt direkt den Port.

In jedem Fall wird in Schritt S5 die entsprechende Regel (entweder direkt als explizite Einzelregel oder wie oben beschrieben als allgemeine Filterregel) an die zweite Regelwerkdurchsetzungseinheit PEP2 geliefert und in dieser hinterlegt. Die Überwachungseinheit R kann die Regel entweder über ein Best-Match-Verfahren in das Regelwerk RW2 der zweiten Regelwerkdurchsetzungseinheit PEP2 einfügen oder das Einfügen der Regel an der richtigen Stelle wird von der zweiten Regelwerkdurchsetzungseinheit PEP2 selbst unterstützt. Hiermit kann sichergestellt werden, dass die Regel entsprechend aktiv ist und nicht durch darüberliegende Freischaltungen nicht zieht.

In Schritt S6 werden von der zweiten Regelwerkdurchsetzungseinheit PEP2 Log-Daten in die Logdatenbank L2 geschrieben. Des Weiteren überwacht die Überwachungseinheit R die zweite Regelwerkdurchsetzungseinheit PEP2 entweder direkt oder mittels der Logdatenbank L2. Dies kann, wie oben in Bezug auf die erste Regelwerkdurchsetzungseinheit PEP1 beschrieben, aktiv oder passiv erfolgen.

In Schritt S7 überwacht die Überwachungseinheit R, ob und wann ein Zustand eintritt, in dem die zweite Regelwerkdurchsetzungseinheit PEP2 wieder deaktiviert werden kann bzw. soll. Dieser Zustand kann dabei insbesondere einer Eigenschaft des in der zweiten oder der ersten Regelwerkdurchsetzungseinheit PEP2, PEP1 eingehenden Netzwerkverkehrs V entsprechen.

Beispielsweise kann diese Eigenschaft sein, dass eine bestimmte Verbindungsanzahl innerhalb eines definierten Intervalls unterschritten sein muss oder einfach nur ein vordefiniertes ZeitIntervall abgelaufen sein muss. Werden von der zweiten Regelwerkdurchsetzungseinheit PEP2 hierfür entsprechende Benachrichtigungen benötigt, kann die Erzeugung entsprechender Log-Nachrichten innerhalb des Regelwerkes für die zweite Regelwerkdurchsetzungseinheit PEP2 durch die ermittelte einzufügende Regel implementiert sein.

Sobald die Regel(n) von der Überwachungseinheit R in das Regelwerk RW2 eingespielt wurde, trägt die Überwachungseinheit R die Regeln in eine interne Statustabelle ein. Diese muss nicht persistent sein, da angenommen wird, dass die in das Regelwerk RW2 eingefügten Regeln ebenfalls nicht persistent sind, sondern durch einen Neustart des Systems ebenfalls verloren gehen. Falls die eingefügten Regeln persistent sind, sollte die Statustabelle entweder ebenfalls persistent sein oder beim Neustart des Systems überprüft werden, ob zuvor eingerichtete temporäre Regeln in der zweiten Regelwerkdurchsetzungseinheit PEP2 bzw. deren Regelwerk RW2 noch enthalten sind und von der Überwachungseinheit R während deren Initialisierung zu entfernen sind.

In der Statustabelle kann neben der aktivierten Regel auch der Zeitstempel der Regelwerksaktivierung überprüft werden. Sofern entsprechende Benachrichtigungen von der zweiten Regelwerkdurchsetzungseinheit PEP2 zur Deaktivierung der Regeln erforderlich sind, kann auch von der Überwachungseinheit ein entsprechender Hit-Count für das entsprechende Log-Ereignis gezählt werden. Tritt ein Ereignis von der zweiten Regelwerkdurchsetzungseinheit PEP2 ein, wird in Schritt S8 dieser entweder inkrementiert oder aber die temporär eingefügte Regel von der Überwachungseinheit R in der zweiten Regelwerkdurchsetzungseinheit PEP2 entfernt und somit erneut der zu beschränkende Netzwerkverkehr V an die erste Regelwerkdurchsetzungseinheit PEP1 weitergeleitet.

Bei einem intervall-basierten Ablauf kann von der Überwachungseinheit R die Statustabelle periodisch (z.B. sekündlich) ausgelesen werden. Sobald das Intervall abgelaufen ist, wird die entsprechende Regel in der zweiten Regelwerkdurchsetzungseinheit PEP2 deaktiviert. Es sollte hierbei beachtet werden, dass die in die zweite Regelwerkdurchsetzungseinheit PEP2 eingefügte Regel dafür sorgt, dass der eingehende Netzwerkverkehr V bereits durch die zweite Regelwerkdurchsetzungseinheit PEP2 gefiltert wird, und nicht ungefiltert an die erste Regelwerkdurchsetzungseinheit PEP1 durchgeleitet oder weitergeleitet wird. Sobald diese (Relokations-)Regel also wieder entfernt wird, wird der Netzwerkverkehr V wieder direkt an die erste Regelwerkdurchsetzungseinheit PEP1 geleitet, ohne Vorfilterung durch die zweite Regelwerkdurchsetzungseinheit PEP2.

Die Relokation des Netzwerkverkehrs V bleibt solange außer Kraft, bis wieder erneute Ereignisse in der ersten Regelwerkdurchsetzungseinheit PEP1 eine Umleitung des Netzwerkverkehrs V durch die Überwachungseinheit R an die zweite Regelwerkdurchsetzungseinheit PEP2 auslösen.

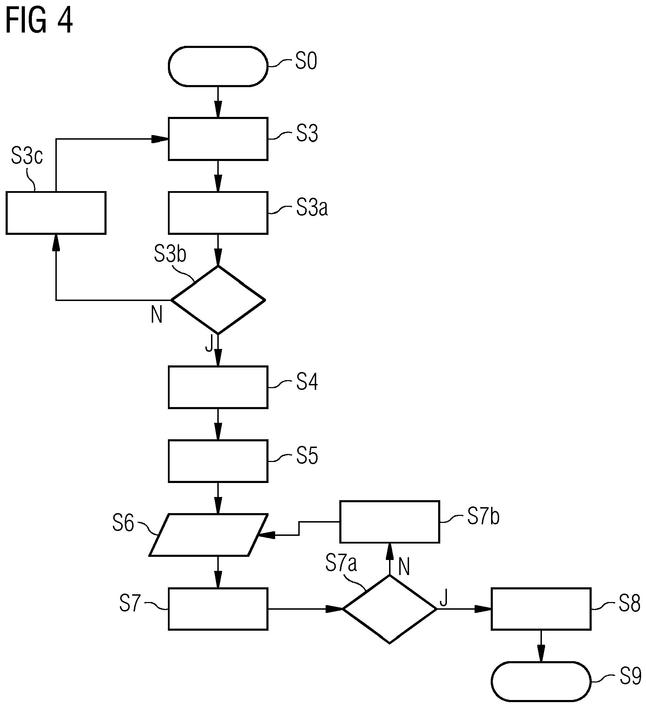

Fig. 4 zeigt nun, zusätzlich zu den bereits in Fig. 3 beschriebenen Verfahrensschritten, weitere Zustände der Überwachungseinheit R bei der Durchführung einer Verlagerung des Netzwerkverkehrs V von der ersten auf die zweite Regelwerkdurchsetzungseinheit PEP1, PEP2 und dessen Rückverlagerung.

Schritt S0 stellt den Start der Überwachungseinheit R dar. Nach dem Empfangen eines Ereignisses E in Schritt S3 wird in Schritt S3a dieses Ereignis zunächst mit dem Regelwerk RW der ersten Regelwerkdurchsetzungseinheit PEP1 abgeglichen. Hierdurch kann sichergestellt werden, dass es sich bei dem Ereignis E um ein Ereignis handelt, welches in dem Regelwerk RW1 hinterlegt ist und eine Umleitung des Netzwerkverkehrs V erfordert. In Schritt S3b wird nun bestimmt, ob die Bedingungen für eine Umleitung des Netzwerkverkehrs V erfüllt sind. Ist dies nicht der Fall, wird in Schritt S3c auf weitere Ereignisse gewartet.

Ist die Bedingung in Schritt S3b erfüllt, fährt die Überwachungseinheit R mit den oben beschriebenen Schritten S4 bis S7, d.h. der Ermittlung der Regel (S4), dem Einspielen der Regel (S5), dem Empfangen von Ereignissen von der zweiten Regelwerkdurchsetzungseinheit PEP2 (S6) und dem Vergleich der Ereignisse mit dem Regelwerk RW2 (S7).

Wenn der Vergleich der Ereignisse aus Schritt S7 ergibt, dass die Bedingungen für eine Löschung der Regel und die Abschaltung der Umleitung des Netzwerkverkehrs V erfüllt sind (Schritt S7a), wird, wie oben beschrieben, die Regel in Schritt S8 gelöscht und die Überwachungseinheit R beendet diesen Vorgang (S9) und fängt erneut mit Schritt S0 an.

Ist die Bedingung in Schritt S7a nicht erfüllt, wartet die Überwachungseinheit R auf weitere Ereignisse in Schritt S7b. Dies wird fortgesetzt, bis die Bedingungen für eine Deaktivierung der zweiten Regelwerkdurchsetzungseinheit PEP2 erfüllt sind.

Wie bereits oben beschrieben, gelten die Verfahrensschritte der Figuren 3 und 4 auch für die Ausführungsform der Fig. 2. In diesem Fall würde das Verfahren zusätzlich entsprechende Schritte aufweisen, die die Umschalteinheit UE zum Umschalten des Netzwerkverkehrs V auf die erste und/oder die zweite Regelwerkdurchsetzungseinheit PEP1, PEP2 veranlassen.

Das oben beschriebene Verfahren kann sowohl lokal auf einem Host verwendet werden oder aber auch auf unterschiedlichen Geräten eingesetzt werden. Bei letzterem sollten die Benachrichtigungen zwischen den jeweiligen Regelwerkdurchsetzungseinheiten PEP1, PEP2 und der Überwachungseinheit R integritäts- und authentizitätsgeschützt sind. Hierfür können beliebige bekannte Verfahren eingesetzt werden.

Obwohl die vorliegende Erfindung anhand von Ausführungsbeispielen beschrieben wurde, ist sie vielfältig modifizierbar.

### Bezugszeichenliste

- E: Ereignis
- L1, L2: Datenbank
- PEP1: erste Regelwerkdurchsetzungseinheit
- PEP2: zweite Regelwerkdurchsetzungseinheit
- R: Überwachungseinheit
- RW: Regelwerksdatenbank
- RW1: Regelwerksdatenbank der ersten Regelwerkdurchsetzungseinheit
- RW2: Regelwerksdatenbank der zweiten Regelwerkdurchsetzungseinheit
- S: Netzwerksystem
- UE: Umschalteinheit
- V: Netzwerkverkehr
- S0 - S9: Verfahrensschritte

## Patentansprüche

1. Netzwerksystem (S) zum Steuern von Netzwerkverkehr (V),
mit einer ersten und einer zweiten Regelwerkdurchsetzungseinheit (PEP1, PEP2), die dazu ausgebildet sind, eingehenden Netzwerkverkehr (V) zu untersuchen, vordefinierte Regeln aus einer Regelwerksdatenbank (RW1, RW2) abzurufen und den Netzwerkverkehr (V) basierend auf diesen vordefinierten Regeln zu filtern, und
mit einer Überwachungseinheit (R) zum Überwachen der ersten und/oder der zweiten Regelwerkdurchsetzungseinheit (PEP1, PEP2),
wobei die Überwachungseinheit (R) dazu ausgebildet ist, basierend auf dem eingehenden Netzwerkverkehr (V), der durch die erste und/oder die zweite Regelwerkdurchsetzungseinheit (PEP1, PEP2) läuft, eine Filterung des Netzwerkverkehrs (V) durch die erste und/oder die zweite Regelwerkdurchsetzungseinheit (PEP1, PEP2) zu aktivieren.

2. Netzwerksystem nach Anspruch 1, **dadurch gekennzeichnet, dass** die erste und die zweite Regelwerkdurchsetzungseinheit (PEP1, PEP2) dazu ausgebildet sind, unterschiedliche vordefinierte Regeln anzuwenden.

3. Netzwerksystem nach einem der vorhergehenden Ansprüche, **dadurch gekennzeichnet, dass** die erste Regelwerkdurchsetzungseinheit (PEP1) dazu ausgebildet ist, den gesamten eingehenden Netzwerkverkehr (V) anhand der vordefinierten Regeln zu filtern, und dass die Überwachungseinheit (R) dazu ausgebildet ist, basierend auf dem durch die erste Regelwerkdurchsetzungseinheit (PEP1) durchgehenden Netzwerkverkehr (V) die zweite Regelwerkdurchsetzungseinheit (PEP2) zur Filterung des gesamten Netzwerkverkehrs (V) oder Teilen des eingehenden Netzwerkverkehrs (V) zu aktivieren.

4. Netzwerksystem nach Anspruch 3, **dadurch gekennzeichnet, dass** die Überwachungseinheit (R) dazu ausgebildet ist, die Filterung durch die zweite Regelwerkdurchsetzungseinheit (PEP2) basierend auf einem Ereignis (E) in dem durch die erste Regelwerkdurchsetzungseinheit (PEP1) gefilterten Netzwerkverkehr (V) zu aktivieren.

5. Netzwerksystem nach Anspruch 4, **dadurch gekennzeichnet, dass** das Ereignis (E) eine Eigenschaft der in dem Netzwerkverkehr (V) enthaltenen Pakete, Meta-Informationen der in dem Netzwerkverkehr (V) enthaltenen Pakete, ein Ergebnis einer statistischen Auswertung des Netzwerkverkehrs (V) und/oder eine Übereinstimmung des Netzwerkverkehrs (V) mit den vordefinierten Regeln ist.

6. Netzwerksystem nach einem der Ansprüche 3 bis 5, **dadurch gekennzeichnet, dass** die Überwachungseinheit (R) dazu ausgebildet ist, die zweite Regelwerkdurchsetzungseinheit (PEP2) nach einem vorbestimmten Zeitraum zu deaktivieren.

7. Netzwerksystem nach einem der Ansprüche 3 bis 6, **dadurch gekennzeichnet, dass** die Überwachungseinheit (R) dazu ausgebildet ist, die zweite Regelwerkdurchsetzungseinheit (PEP2) zu deaktivieren, wenn der Netzwerkverkehr (V) ein vorbestimmtes Kriterium erfüllt.

8. Netzwerksystem nach einem der vorhergehenden Ansprüche, **dadurch gekennzeichnet, dass** die erste Regelwerkdurchsetzungseinheit (PEP1) hinter die zweite Regelwerkdurchsetzungseinheit (PEP2) geschaltet ist, wobei eingehender Netzwerkverkehr (V) durch die zweite Regelwerkdurchsetzungseinheit (PEP2) an die erste Regelwerkdurchsetzungseinheit (PEP1) ohne weitere Filterung weitergeleitet wird.

9. Netzwerksystem nach Anspruch 8, **dadurch gekennzeichnet, dass** die Überwachungseinheit (R) dazu ausgebildet ist, eine Regel in die Regelwerksdatenbank (RW2) für die zweite Regelwerkdurchsetzungseinheit (PEP2) einzufügen, um eine Filterung des Netzwerkverkehrs (V) durch die zweite Regelwerkdurchsetzungseinheit (PEP2) zu aktivieren.

10. Netzwerksystem nach Anspruch 9, wobei die Überwachungseinheit (R) dazu ausgebildet ist, die Filterung des Netzwerkverkehrs (V) durch die zweite Regelwerkdurchsetzungseinheit (PEP2) zu deaktivieren, indem die Regel aus der Regelwerksdatenbank (RW2) gelöscht wird.

11. Netzwerksystem nach einem der vorhergehenden Ansprüche, **dadurch gekennzeichnet, dass** das Netzwerksystem (S) eine Umschalteinheit (UE) aufweist, wobei die Überwachungseinheit (R) dazu ausgebildet ist, ein Umschaltsignal an die Umschalteinheit (UE) zu senden, die dazu ausgebildet ist, basierend auf dem Umschaltsignal den Netzwerkverkehr (V) an die erste und/oder die zweite Regelwerkdurchsetzungseinheit (PEP1, PEP2) zu leiten, wobei das Umschaltsignal eine Aktivierung der Filterung des Netzwerkverkehrs (V) durch die erste und/oder die zweite Regelwerkdurchsetzungseinheit (PEP1, PEP2) angibt.

12. Verfahren zum Steuern von Netzwerkverkehr (V), wobei das Verfahren die Schritte aufweist:
Abrufen (S2, S4) von vordefinierten Regeln aus einer Regelwerksdatenbank (RW1, RW2),
Untersuchen (S1) von eingehendem Netzwerkverkehr (V) und Filtern des Netzwerkverkehrs (V) basierend auf den vordefinierten Regeln durch eine erste und eine zweite Regelwerkdurchsetzungseinheit (PEP1, PEP2), und
Überwachen (S3, S6) der ersten und/oder der zweiten Regelwerkdurchsetzungseinheit (PEP1, PEP2) durch eine Überwachungseinheit (R), wobei das Überwachen ein Aktivieren der Filterung des Netzwerkverkehrs (V) durch die erste und/oder die zweite Regelwerkdurchsetzungseinheit (PEP1, PEP2) basierend auf dem eingehenden Netzwerkverkehr (V), der durch die erste und/oder die zweite Regelwerkdurchsetzungseinheit (PEP1, PEP2) läuft, umfasst.

13. Computerprogrammprodukt, welches auf einer programmgesteuerten Einrichtung die Durchführung des Verfahrens nach Anspruch 12 veranlasst.
